# EUROPEAN PATENT SPECIFICATION

(11) **EP 0 542 452 B1**
(45) Date of publication and mention of the grant of the patent: **06.03.1996**
(21) Application number: 92309906.3
(22) Date of filing: 29.10.1992
(51) Int. Cl.: F02M 35/10, F02F 1/40, F02F 1/42

(54) **Improvements in connecting pressure medium systems to the cylinder head of an I.C. engine**
Verbesserung der Verbindungsanlage der Unterdruckflüssigkeit für den Zylinderkopf einer Brennkraftmaschine
Amélioration du dispositif de connexion des liquides sous pression à la culasse d'un moteur à combustion interne

(30) Priority: 11.11.1991 FI 915297
(43) Date of publication of application: 19.05.1993
(73) Proprietor: Oy Wartsila Diesel International Ltd., SF-00530 Helsinki (FI)
(72) Inventor: Stenfors, Hugo, SF-66550 Västerhankmo (FI); Nikula, Arto, SF-66510 Merikaarto (FI)
(74) Representative: Newby, John Ross

(56) References cited:
- EP-A- 0 422 370
- FR-A- 531 674
- FR-A- 734 631
- FR-A- 2 347 530
- US-A- 2 573 095
- PATENT ABSTRACTS OF JAPAN vol. 6, no. 130 (M-143)16 July 1982 & JP-A-57 056 655

## Description

The invention relates to an arrangement for the connection of the different pressure media to the cylinder head of a diesel engine (especially a large diesel engine) in accordance with the preamble of claim 1.

In this specification, the term "large diesel engine" should be taken to mean the sort of engine used in ships as the main or auxiliary engine, or in a diesel power station. Large diesel engines are usually supercharged and they are also often provided with a separate cylinder head for each cylinder. In a large diesel engine there is a need to transport several different pressure media through the cylinder head, whereby transportation of pressure media into and out from the cylinder head is arranged through a complex arrangement of pipes and parts. For example combustion air is usually led from the turbocharger to a special container, which can be separate from, or built into, the engine block, and from which container it is led via further pipe members to each cylinder head and down into each cylinder.

The exhaust gases leave each cylinder through the respective cylinder head and through a further arrangement of pipe members into the exhaust manifold of the engine, which in most cases is thermally insulated and/or acoustically isolated within a separate casing. Support for the exhaust pipe and for the exhaust isolation unit is typically effected using separate support consoles fastened to the engine block.

Liquid coolant for the cylinders is also used for cooling the cylinder heads, whereby a pipe manifold connected to each cylinder head is required to recover the coolant for reuse.

In JP-A-57056655 there is disclosed a diesel engine of the kind described in the preamble of claim 1. In this known reference, a single distribution piece, fixed only to the cylinder head, is shown which is common to all the cylinders.

The above-described known arrangements for pressure medium systems in a large diesel engine have resulted in complications with many separate parts to be separately fastened, adding to manufacturing costs and making servicing of such engines laborious and time-consuming.

One aim of this invention is to provide an improved arrangement for the connection of the different pressure media to the cylinder head of a diesel engine, from which the drawbacks apparent in the above-described known arrangements have essentially been eliminated. A more specific aim is to create an engine with a less complicated construction providing advantages from the viewpoint of manufacturing technique, and an installation which saves time and costs. A further aim is to provide a new support means for supporting other engine parts from the engine block.

The aims of the invention are achieved in the manner set out in claim 1 and in the subclaims.

According to the invention a diesel engine according to the preamble of claim 1, is characterised in that the cylinder means comprises a plurality of cylinders, in that a separate distribution piece is provided for each cylinder, each distribution piece having a further flange-like attachment member for fixing the distribution piece to the engine block, and in that each of said a first through-flow channels is arranged to lead combustion air from a collecting container which can be built into the engine block or separately fastened to the engine block through the cylinder head to the associated cylinder.

Preferably each connection piece also includes a through-flow channel for liquid coolant.

A preferred distribution piece constitutes a one-piece casting.

From the viewpoint of ease of construction and manufacturing techniques, it is advantageous to arrange the connection ports in each distribution piece which are connectable to the cylinder head at least substantially in a common plane. From the viewpoint of space requirements it is of advantage to arrange the combustion air channel and the exhaust gas channel in each distribution piece adjacent to each other in the longitudinal direction of the engine.

The exhaust gas channel of each distribution piece is, with advantage, arranged so that its inlet and outlet are located on opposite sides of the distribution piece. By providing the outlet for the exhaust gas channel of each distribution piece with a flange or the like, the exhaust pipe (or manifold) and an isolating casing possibly attached thereto, can be supported directly from the engine block through the distribution piece.

Where the engine block includes a collecting channel or the like for collecting liquid coolant, used in a known way for cooling a cylinder, a coolant channel can also be provided in each distribution piece which is, with advantage, located to at least partly surround the exhaust gas channel, the outlet of the coolant channel being connected to the said collecting channel or the like for coolant located in the engine block. Thus a space-saving unitary construction is possible for each distribution piece and at the same time the use of such distribution pieces facilitates cooling of the exhaust gas channel and the entire engine block.

The invention will now be further described, in more detail, by way of example, with reference to the accompanying drawings, in which:
Figure 1 shows a cross-sectional view of a large diesel engine, in which an arrangement according to the invention for the connection of different pressure medium systems to the cylinder head is employed,
Figures 2, 3 and 4 show a side view of a distribution piece according to the invention, whereby different pressure medium channels are illustrated in different Figures with shading,
Figure 5 shows the distribution piece of Figures 2, 3 and 4 seen in the direction of arrow V, and
Figure 6 shows the distribution piece of Figures 2, 3 and 4 seen in the direction of arrow VI.

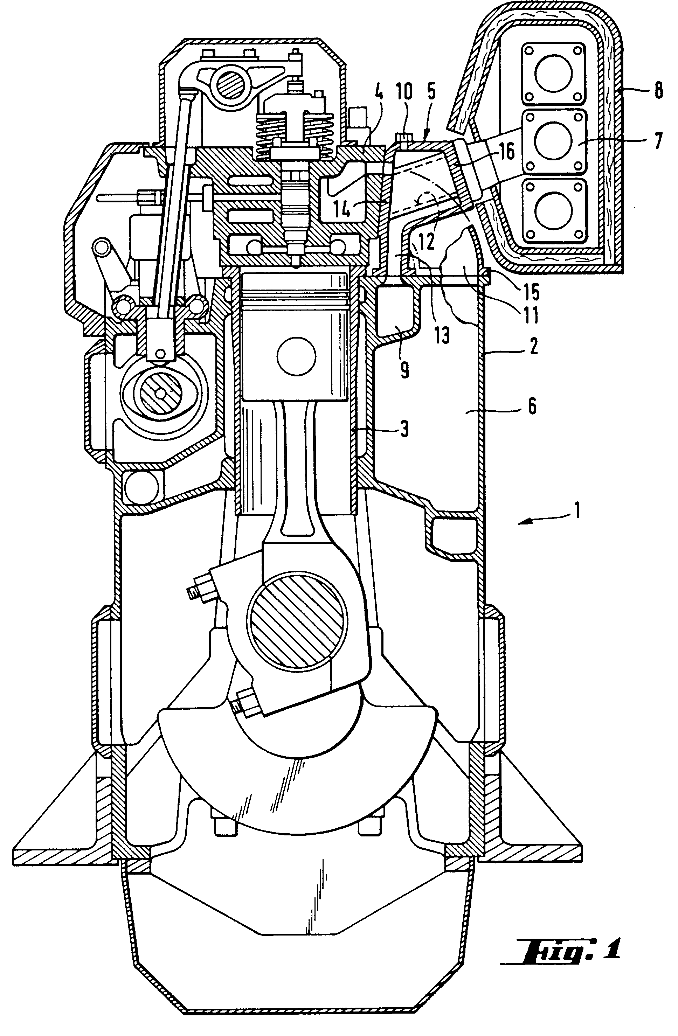

In the drawings, the numeral 1 indicates a large diesel engine to which the invention is directed. As shown in Figure 1 the engine 1 includes an engine block 2, a cylinder 3 and a cylinder head 4. Conventionally there can be a plurality of cylinders in the engine arranged adjacent to each other in a row or so as to form a V-engine and each of the cylinders can, with advantage, be provided with its own cylinder head. The engine also includes an exhaust manifold 7, which is, as shown in Figure 1, surrounded by an isolating casing 8. Furthermore the engine includes a collecting container 6, arranged in the engine block 2, for combustion air fed by a turbocharger (not shown) and a collecting channel 9 for the cooling water or other suitable cooling fluid used for the cooling of the cylinder 3. In addition, each cylinder 3 in the engine is provided with a distribution piece 5 for different pressure media, the construction and the function of which as part of the arrangement according to the invention will be described in more detail in the following. The other parts of the engine shown in Figure 1 forming no part of the present invention have not been given reference numbers and are not described here.

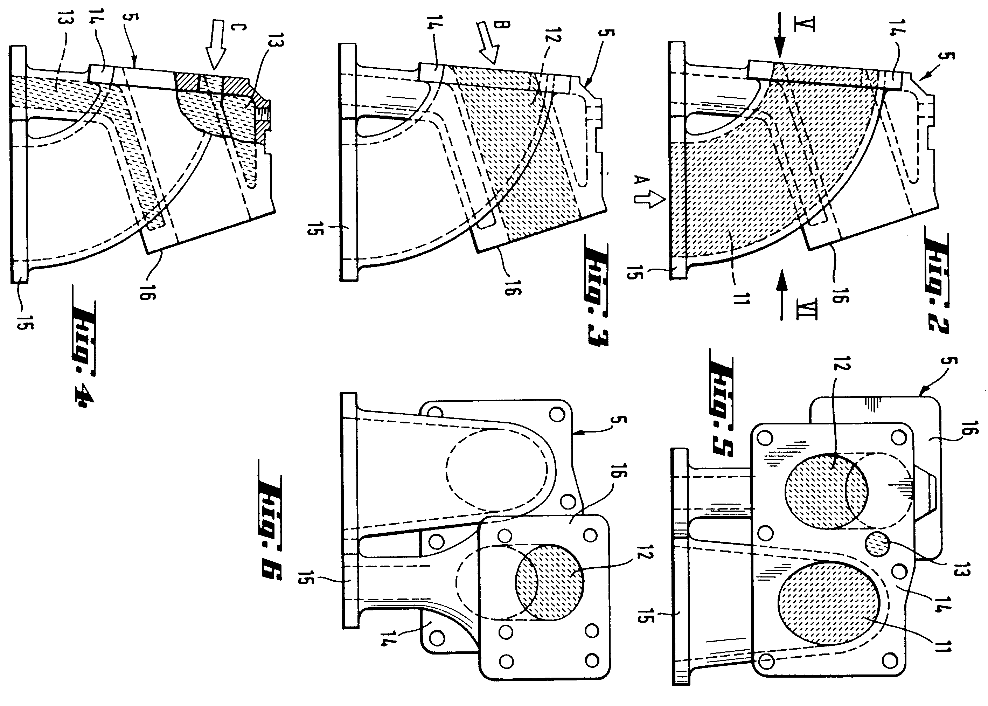

The distribution piece 5 constitutes a single piece, which is with advantage manufactured by casting. The distribution piece 5 includes a combustion air channel 11, which leads combustion air from the collecting container 6 in the engine block 2, through the cylinder head 4 and on further into the cylinder 3. The combustion air channel 11 is shaded in Figure 2 and the direction of flow is indicated by the arrow A.

The distribution piece 5 includes also an exhaust gas channel 12, which leads exhaust gases from the cylinder 3 through the cylinder head 4 into the exhaust manifold 7 of the cylinder in question. The exhaust gas channel 12 is shaded in Figure 3 and the direction of flow is shown by the arrow B.

In addition, the distribution piece 5 includes a coolant channel 13, which leads the cooling water used for cooling the cylinder 3, through the cylinder head 4 and further into the cooling water collecting channel 9 located in the engine block 2 for recovery and recycling. The coolant channel 13 is shaded in Figure 4 and the direction of flow is shown by the arrow C.

The distribution piece 5 is provided with flange-like attachment members 14 and 15, by means of which it is attached on the one hand to the cylinder head 4 and on the other hand to the engine block 2. As the distribution piece 5 thus forms a rigid and compact part of the engine, it is additionally arranged to support the exhaust manifold 7 and its isolating casing 8 by means of a flange member 16. Hence, no separate supporting structure needs to be fastened to the engine block to support the exhaust manifold, as is the case with conventional engines.

As the combustion air channel 11 and the exhaust gas channel 12 are the largest ones of the channels provided in the distribution piece 5, in accordance with the embodiment illustrated, they are positioned adjacent to each other in the longitudinal direction of the engine as shown in Figure 5. From the viewpoint of construction and manufacturing techniques it is of advantage that the connection ports provided in the flange member 14 of the distribution piece 5 open in a common plane where they can easily mate with corresponding ports in the cylinder head 4. Although not shown clearly in the drawings, it will be understood that the facing surface of the cylinder head 4 is designed to seal to the flange member 14.

In the embodiment shown in the drawings the coolant channel 13 surrounds the exhaust gas channel 12, whereby a space saving and advantageous solution from the viewpoint of the cooling of the distribution piece is achieved.

Generally the form and location of the channels 11, 12 and 13 can be changed according to need. This is especially true with engine designs, where the collecting container 6 for combustion air or the collecting channel 9 for the coolant has not been incorporated as a part of the engine block itself. The invention can further be adapted also to non-supercharged engines. An essential thing is that there be a separate distribution piece 5 provided, which is connectable to the cylinder head 4 and by means of which at least two different pressure medium flows are lead through the cylinder head 4 and thus a number of separate connection pipes can be eliminated. At the same time the distribution piece can, with advantage, serve as a support for the fastening of other parts as described above. All this makes not only the construction of the engine more simple but also the production of the parts as well as the measures required for installation and service.

Figure 1 shows, by way of example, a bleed screw 10 communicating with the coolant channel 13. This illustrates that a distribution piece 5 according to the invention can, with advantage, be used also for controlling and for regulating the flows of pressure media flowing through it.

## Claims

1. A diesel engine including an engine block (2) having cylinder means (3) therein, two or more different pressure media being provided for the cylinder means (3), which media are conveyed through respective passages in a cylinder head (4) of the engine block (2), wherein a connection port for each pressure medium required by the cylinder means (3) is positioned in the cylinder head (4) on the same side of the engine block (2), wherein a distribution piece (5) is provided for the cylinder means (3) which is installed on the cylinder head (4) at the position of said connection ports, said distribution piece (5) including a first through-flow channel (11) for leading combustion air from an air supplying system through the cylinder head (4) into the cylinder means (3), and a second through-flow channel (12) for leading exhaust gases through the cylinder head (4) into an exhaust pipe (7), wherein said through-flow channels (11, 12) are arranged substantially in a transverse direction relative to the engine block (2), and wherein the distribution piece (5) includes a flange-like attachment member (14) for fixing the distribution piece (5) to the cylinder head (4), characterised in that the cylinder means comprises a plurality of cylinders (3), in that a separate distribution piece(5) is provided for each cylinder (3), each distribution piece having a further flange-like attachment member (15) for fixing the distribution piece to the engine block, and in that each of said first through-flow channels (11) is arranged to lead combustion air from a collecting container (6) which can be built into the engine block or separately fastened to the engine block, through the cylinder head to the associated cylinder (3).

2. An engine according to claim 1, characterised in that each distribution piece (5) includes a third through-flow channel (13) for liquid coolant required for cooling the cylinder (3) and the cylinder head (4).

3. An engine according to claim 1 or claim 2, characterised in that each distribution piece (5) constitutes a one-piece casting.

4. An engine according to any one preceding claim, characterised in that the connection ports in each distribution piece (5) connectable to the cylinder head (4) are arranged at least substantially in a common plane.

5. An engine according to any one of the preceding claims, characterised in that the combustion air channel (11) and the exhaust gas channel (12) in each distribution piece (5) are arranged adjacent to each other in the longitudinal direction of the engine.

6. An engine according to any one of the preceding claims, characterised in that the exhaust gas channel (12) of each distribution piece (5) is arranged so that its inlet and outlet are located on opposite sides of the distribution piece (5).

7. An engine according to any one of the preceding claims, characterised in that the outlet for the exhaust gas channel (12) of each distribution piece (5) is provided with a flange (16) or the like for supporting the exhaust pipe (7), and optionally an isolating casing (8) therefor, from the engine block (2) via each distribution piece (5).

8. A large supercharged diesel engine according to any one of the preceding claims, in which the engine block (2) includes a collecting channel (9) or the like for the transport of coolant through the cylinder head (4), characterised in that the coolant channel (13) of each distribution piece (5) is located to at least partly surround the exhaust gas channel (12) and its outlet is arranged to be connected to the said collecting channel (9) or the like located in the engine block (2).

## Patentansprüche

1. Dieselmaschine mit einem Maschinenblock (2), der eine Zylindereinrichtung (3) aufweist, wobei zwei oder mehr unterschiedliche Druckmedien für die Zylindereinrichtung (3) vorgesehen sind, welche Medien durch entsprechende Passagen in einem Zylinderkopf (4) des Maschinenblocks (2) transportiert werden, wobei ein Verbindungsanschluß für jedes von der Zylindereinrichtung (3) erforderliche Druckmedium in dem Zylinderkopf (4) auf der gleichen Seite des Maschinenblocks (2) angeordnet ist, wo ein Verteilungsteil (5) für die Zylindereinrichtung (3) vorgesehen ist, welches an dem Zylinderkopf (4) an der Stelle der Verbindungsanschlüsse montiert ist, welches Verteilungsteil (5) einen ersten Durchflußkanal (11) zum Leiten von Verbrennungsluft von einem Luftzuführsystem durch den Zylinderkopf (4) in die Zylindereinrichtung (3) und einen zweiten Durchflußkanal (12) aufweist, um Abgase durch den Zylinderkopf (4) in ein Auspuffrohr (7) zu leiten, wobei die Durchflußkanäle (11,12) im wesentlichen in einer Richtung quer zum Maschinenblock (2) angeordnet sind und wobei das Verteilungsteil (5) ein flanschartiges Verbindungsteil (14) aufweist, um das Verteilungsteil (5) mit dem Zylinderkopf (4) zu verbinden,
dadurch **gekennzeichnet**,
daß die Zylindereinrichtung viele Zylinder (3) aufweist, daß ein separates Verteilungsteil (5) für jeden Zylinder (3) vorgesehen ist, wobei jedes Verteilungsteil ein weiteres flanschartiges Verbindungsteil (15) aufweist, um das Verteilungsteil an dem Maschinenblock zu befestigen, und daß jeder der ersten Durchflußkanäle (11) angeordnet ist, um Verbrennungsluft von einem Sammeltank (6), welcher in dem Maschinenblock ausgebildet oder separat an dem Maschinenblock befestigt sein kann, durch den Zylinderkopf zu dem zugehörigen Zylinder (3) zu leiten.

2. Maschine nach Anspruch 1,
dadurch **gekennzeichnet,**
daß jedes Verteilungsteil (5) einen dritten Durchflußkanal (13) für Kühlflüssigkeit zur Kühlung des Zylinders (3) und des Zylinderkopfs (4) aufweist.

3. Maschine nach Anspruch 1 oder 2,
dadurch **gekennzeichnet,**
daß jedes Verteilungsteil (5) als einteiliges Gußstück ausgebildet ist.

4. Maschine nach einem der vorhergehenden Ansprüche,
dadurch **gekennzeichnet,**
daß die mit dem Zylinderkopf (4) verbindbaren Verbindungsanschlüsse in jedem Verteilungsteil in einer im wesentlichen gemeinsamen Ebene angeordnet sind.

5. Maschine nach einem der vorhergehenden Ansprüche,
dadurch **gekennzeichnet,**
daß der Verbrennungsluftkanal (11) und der Abgaskanal (12) in jedem Verteilungsteil (5) in Längsrichtung der Maschine nebeneinander angeordnet sind.

6. Maschine nach einem der vorhergehenden Ansprüche,
dadurch **gekennzeichnet,**
daß der Abgaskanal (12) jedes Verteilungsteils (5) derart angeordnet ist, daß sein Einlaß und Auslaß an einander abgewandten Seiten des Verteilungsteils (5) angeordnet sind.

7. Maschine nach einem der vorhergehenden Ansprüche,
dadurch **gekennzeichnet,**
daß der Auslaß für den Abgaskanal (12) jedes Verteilungsteils (5) mit einem Flansch (16) oder dergleichen versehen ist, um das Auspuffrohr (7) und gegebenenfalls ein dafür vorgesehenes Isolationsgehäuse (8) an dem Maschinenblock (2) über jedes Verteilungsteil (5) abzustützen.

8. Große aufgeladene Dieselmaschine nach einem der vorhergehenden Ansprüche, bei welcher der Maschinenblock (2) einen Sammelkanal (9) oder dergleichen für den Transport von Kühlflüssigkeit durch den Zylinderkopf (4) aufweist,
dadurch **gekennzeichnet,**
daß der Kühlkanal (13) jedes Verteilungsteils (5) derart angeordnet ist, daß er zumindest teilweise den Abgaskanal (12) umgibt, und daß dessen Auslaß angeordnet ist, um mit dem Sammelkanal (9) oder dergleichen verbunden zu werden, der in dem Maschinenblock (2) angeordnet ist.

## Revendications

1. Moteur diesel comprenant un bloc-moteur (2) comportant des moyens de cylindre (3) dans celui-ci, deux ou plusieurs fluides sous pression différents étant prévus pour les moyens de cylindre (3), fluides qui sont acheminés par l'intermédiaire de passages respectifs dans une culasse (4) du bloc-moteur (2), dans lequel un orifice de raccordement pour chaque fluide sous pression nécessaire aux moyens de cylindre (3) est positionné dans la culasse (4) du même côté du bloc-moteur (2), dans lequel il est prévu une pièce de distribution (5) pour les moyens de cylindre (3) qui est installée sur la culasse (4) à l'emplacement desdits orifices de raccordement, ladite pièce de distribution (5) comprenant un premier conduit de passage (11) pour conduire de l'air de combustion provenant d'un système d'alimentation en air au travers de la culasse (4) jusque dans les moyens de cylindre (3), et un second conduit de passage (12) pour conduire les gaz d'échappement au travers de la culasse (4) jusque dans un tuyau d'échappement (7), dans lequel lesdits conduits de traversée (11, 12) sont disposés sensiblement dans le sens transversal par rapport au bloc-moteur (2), et dans lequel la pièce de distribution (5) comprend un élément de fixation en forme de bride (14) pour fixer la pièce de distribution (5) à la culasse (4), caractérisé en ce que les moyens de cylindre comprennent une pluralité de cylindres (3), en ce qu'une pièce de distribution (5) séparée est prévue pour chaque cylindre (3), chaque pièce de distribution comportant un élément de fixation supplémentaire en forme de bride (15) permettant de fixer la pièce de distribution au bloc-moteur, et en ce que chacun desdits premiers conduits (15) est agencé pour conduire de l'air de combustion depuis une chambre de collecte (6), qui peut être incorporée au bloc-moteur ou y être fixée séparément, au travers de la culasse jusqu'au cylindre (3) associé.

2. Moteur selon la revendication 1, caractérisé en ce que chaque pièce de distribution (5) comprend un troisième conduit de passage (13) destiné au liquide réfrigérant nécessaire pour refroidir le cylindre (3) et la culasse (4).

3. Moteur selon la revendication 1 ou la revendication 2, caractérisé en ce que chaque pièce de distribution (5) constitue une pièce moulée monobloc.

4. Moteur selon l'une quelconque des revendications précédentes, caractérisé en ce que les orifices de raccordement de chaque pièce de distribution (5) pouvant être raccordés à la culasse (4) sont disposés au moins sensiblement dans un plan commun.

5. Moteur selon l'une quelconque des revendications précédentes, caractérisé en ce que le conduit d'air de combustion (11) et le conduit de gaz d'échappement (12) de chaque pièce de distribution (5) sont disposés l'un à côté de l'autre dans le sens longitudinal du moteur.

6. Moteur selon l'une quelconque des revendications précédentes, caractérisé en ce que le conduit de gaz d'échappement (12) de chaque pièce de distribution (5) est agencé de telle manière que son entrée et sa sortie soient situées sur des côtés opposés de la pièce de distribution (5).

7. Moteur selon l'une quelconque des revendications précédentes, caractérisé en ce que la sortie du conduit de gaz d'échappement (12) de chaque pièce de distribution (5) est équipée d'une bride (16) ou analogue permettant de supporter le tuyau d'échappement (7), et de façon optionnelle une enveloppe isolante pour celui-ci, à partir du bloc-moteur (2) par l'intermédiaire de chaque pièce de distribution (5).

8. Gros moteur diesel suralimenté selon l'une quelconque des revendications précédentes, dans lequel le bloc-moteur (2) comprend un conduit de collecte (9) ou analogue pour le transport de réfrigérant au travers de la culasse (4), caractérisé en ce que le conduit de réfrigérant (13) de chaque pièce de distribution (5) est situé de façon à entourer au moins partiellement le conduit de gaz d'échappement (12), et en ce que sa sortie est agencée pour être raccordée audit conduit de collecte (9) ou analogue situé dans le bloc-moteur (2).
